Europäisches Patentamt

European Patent Office

Office européen des brevets

(11) Publication number: **0 600 213 A1**

## EUROPEAN PATENT APPLICATION

(21) Application number: 93117142.5

(22) Date of filing: 22.10.93

(51) Int. Cl.5: **G01N 30/02**, G01N 30/74

(30) Priority: **30.10.92 US 969324**

(43) Date of publication of application:
**08.06.94 Bulletin 94/23**

(84) Designated Contracting States:
**DE ES FR GB IT**

(71) Applicant: **E.I. DU PONT DE NEMOURS AND COMPANY**
**1007 Market Street**
**Wilmington Delaware 19898(US)**

(72) Inventor: **Johnson, David Michael**
**733 Gateway Road**
**Hockessin, Delaware 19707(US)**
Inventor: **Steenhoek, Larry Eugene**
**233 Charleston Drive**
**Wilmington, Delaware 19808(US)**

(74) Representative: **Davies, Christopher Robert**
**Frank B. Dehn & Co.**
**Imperial House**
**15-19 Kingsway**
**London WC2B 6UZ (GB)**

(54) **Field portable liquid chromatographic system.**

(57) A liquid chromatographic system is portable for allowing on-site detection of analytes in a sample of liquid. The system comprises a high pressure pump for introducing a carrier fluid into a chromatographic column. A detection mechanism including a deuterium lamp is disposed in alignment with the outlet of the column for measuring the properties of the organic analytes in the sample while maintaining their chemical identity. The system provides high-speed separation and can be powered from a low energy-consuming power source.

FIG.1A

FIG.1B

## BACKGROUND OF THE INVENTION

### 1. Field of the Invention

The present invention relates to a field portable liquid chromatographic system for determining the identity and concentration of organic analytes in a sample, and in particular, to a high-pressure, field portable liquid chromatographic system.

### 2. Description of the Related Art

It is frequently necessary to detect the presence of organic compounds in a variety of matrices. In particular, it is often necessary to examine contaminants in groundwater. Instruments for detecting compounds such as metals or other analytes are known. For example, U.S. Patent No. 4,737,465 to Bond et al. discloses an apparatus and method for detecting the presence of metals in an effluent. The detection system in Bond et al. comprises two detectors in series, a microcomputer and a video display screen or printer. One of the detectors is a uv-visible spectrophotometer where the metal complexes in the effluent are monitored on their ability to absorb energy in the uv-visible and visible regions of the spectrum. The other detector is an electrochemical detector where the metal complexes are monitored on their ability to undergo an electrochemical oxidation reaction. The system of Bond et al. is not designed to detect the identity and concentration of organic analytes. Moreover, the instrument of Bond et al. must alter the chemical identity of the analytes prior to or during its detection.

Field portable liquid chromatographic instruments have been developed and are particularly desirable for on-site use, since they allow immediate analysis of the sample at the site. This reduces the analysis cost and the time associated with transporting the sample to a laboratory. In addition, they allow sampling decisions to be made on-site. An example of a portable system for analyzing a fluid sample is U.S. Patent No. 4,888,295 to Zaromb.

Specifically, Zaromb uses plural electrochemical sensors having differing electrochemical responses to a given eluted component or to a derivative thereof which is dependent on the chemical interaction of the component or the derivative thereof with each of the sensors. However, like the instrument disclosed in the Bond et al. patent, the instrument disclosed in the Zaromb patent must alter the chemical identity of the analyte being analyzed.

Moreover, known field portable instruments are not capable of providing the high resolution necessary for an on-site analytical instrument, while operating at desired high speeds and high pressures with low energy consumption. This is primarily due to the fact that it is generally necessary to provide longer chromatographic columns with their associated higher energy consumption to increase resolution, and that increasing the length of chromatographic columns decreases the speed of the chromatographic process. Also, because known field portable instruments, which operate at high pressures, have high energy consumption, it is more economical to operate such instruments at low pressures. This decreased speed and pressure limitation detract from portability and field operation.

Accordingly, it is an object of the present invention to provide a field portable liquid chromatographic system for determining the identity and concentration of organic analytes in a sample of liquid while maintaining the chemical identity of the analytes.

A further object of the present invention is to provide a field portable liquid chromatographic system which can operate at high pressures, thereby achieving controlled, rapid flow of the mobile phase and better, faster separations.

Another object of the invention is to be able to utilize a radiant energy source, such as a deuterium lamp, with a field portable liquid chromatographic system so as to provide sensitive detection at lower wavelength ranges than those used in the prior art, thereby providing greater sensitivity and the ability to analyze a wider range of analytes.

Yet another object of the present invention is to provide a field portable liquid chromatographic system which is capable of high speed separation and which has all of the quantitative capabilities of a conventional liquid chromatographic system while allowing for on-site analysis in remote locations.

A further object of the present invention is to provide a field portable liquid chromatographic system which is applicable to waste material monitoring, as well as geological monitoring, forensics, therapeutic drug monitoring, reaction monitoring and product quality/contamination monitoring.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

SUMMARY OF THE INVENTION

To achieve the foregoing objects, and in accordance with the purposes of the invention as embodied and broadly described herein, there is provided a field portable, high-pressure liquid chromatographic system for determining at least one of the identity and concentration of organic analytes in a sample of liquid. The system comprises a column having an inlet and an outlet, where the liquid elutes from the outlet. A pump introduces a carrier fluid at a high pressure into the column. An injection mechanism introduces the sample to the carrier fluid at the inlet of the column. A detection mechanism disposed at the outlet of the column measures the properties of the organic analytes in the sample.

Further in accordance with the present invention there is further provided a field portable liquid chromatographic system for determining at least one of the identity and concentration of organic analytes in a sample of liquid comprising a detection mechanism disposed at the outlet of the column which measures the properties of the organic analytes in the sample while maintaining the chemical identity thereof. It is preferable that the detection mechanism comprises a deuterium lamp.

Also in accordance with the present invention there is provided a field portable liquid chromatographic system for determining at least one of the identity and concentration of organic analytes in a sample of liquid comprising a detection mechanism disposed at the outlet of the column for measuring the properties of the analytes in the sample, the detection mechanism having an output indicative of the identity and quantity of the analytes and a mechanism for displaying the output as a function of time, wherein the displayed output is used to determine a peak volume, the peak volume being defined substantially by the relationship:

$$V_p = \frac{\pi \, d_c^2 \, \varepsilon \, L \, (1 + k')}{\sqrt{N}}$$

where:
$d_c$ = column internal diameter = 0.5 - 4.6 mm
$\epsilon$ = column porosity = 0.4 - 1.0
$L$ = column length = 10 - 100 mm
$k'$ = capacity factor = 1 - 50; and
$N$ = number of plates = 500 - 15,000

BRIEF DESCRIPTION OF THE DRAWINGS

The accompanying drawings, which are incorporated in and constitute a part of the specification, illustrate a presently preferred embodiment of the invention, and together with the general description given above and the detailed description of the preferred embodiment given below, serve to explain the principles of the invention.

Fig. 1a is a schematic view of the chromatographic components of the system of the present invention, showing an injection valve in the "LOAD" position.

Fig. 1b is a partial, schematic view of the system of Fig. 1a, showing the injection valve in the "INJECT" position.

Fig. 2 is a block diagram of the chromatographic components, the detection mechanism and the computer mechanism of the system of the present invention.

Fig. 3 is a circuit diagram of the servo-controller circuit for the motor which drives the pump of the present invention.

Fig. 4 is a block diagram of the detection mechanism of the present invention.

Fig. 5 is a block diagram of the signal conditioning circuit of the present invention.

Fig. 6 is a block diagram of the power supply for the detection mechanism of the present invention.

Figs. 7a - 7f are chromatograms associated with six standard samples of bromacil, simazine and diuron analyzed by the chromatographic system of the present invention.

Fig. 7g is the chromatogram of Fig. 7f, illustrating how the peak volume values for bromacil and diuron are calculated.

Fig. 8 shows the calibration curves associated with the six standard samples of bromacil, simazine and diuron analyzed by the chromatographic system of the present invention.

Fig. 9 is a chromatogram of a ground water sample analyzed by the chromatographic system of the present invention.

Fig. 10 is a chromatogram of a standard sample of six sulfonylurea analytes analyzed by the chromatographic system of the present invention.

## DESCRIPTION OF THE PREFERRED EMBODIMENT

Reference will now be made in detail to the present preferred embodiment of the invention as illustrated in the accompanying drawings.

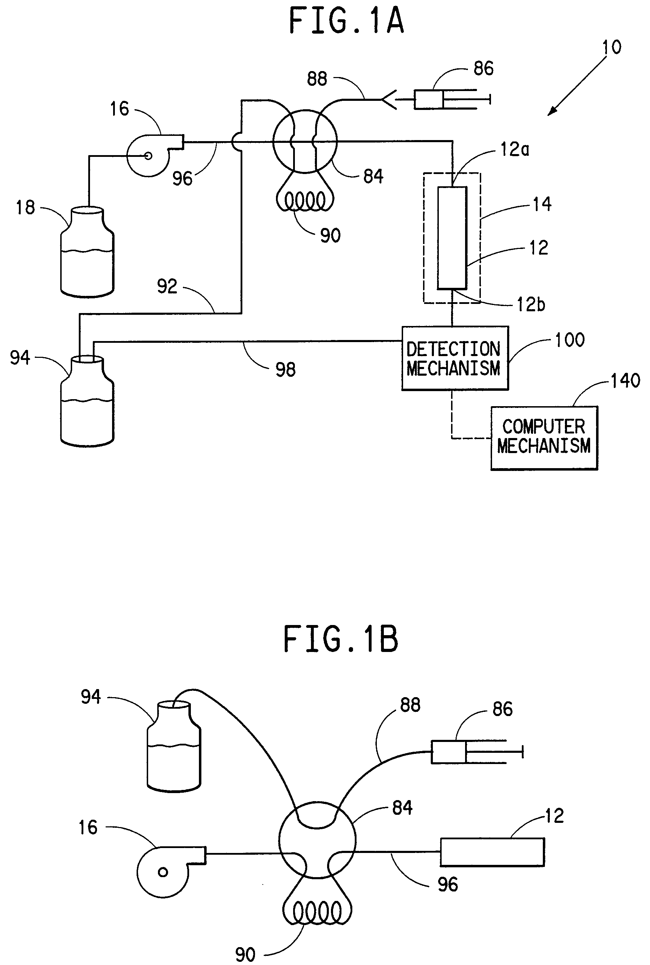

In accordance with the present invention there is provided a field portable liquid chromatographic system for determining at least one of the identity and concentration of organic analytes in a sample of liquid. The analytes analyzed by the system of the present invention include organic compounds of a gaseous, liquid or solid nature in a liquid matrix. Such a system is shown generally at 10 in Fig. 1. System 10 comprises a column 12 having an inlet 12a and an outlet 12b. The liquid elutes from outlet 12b of the column.

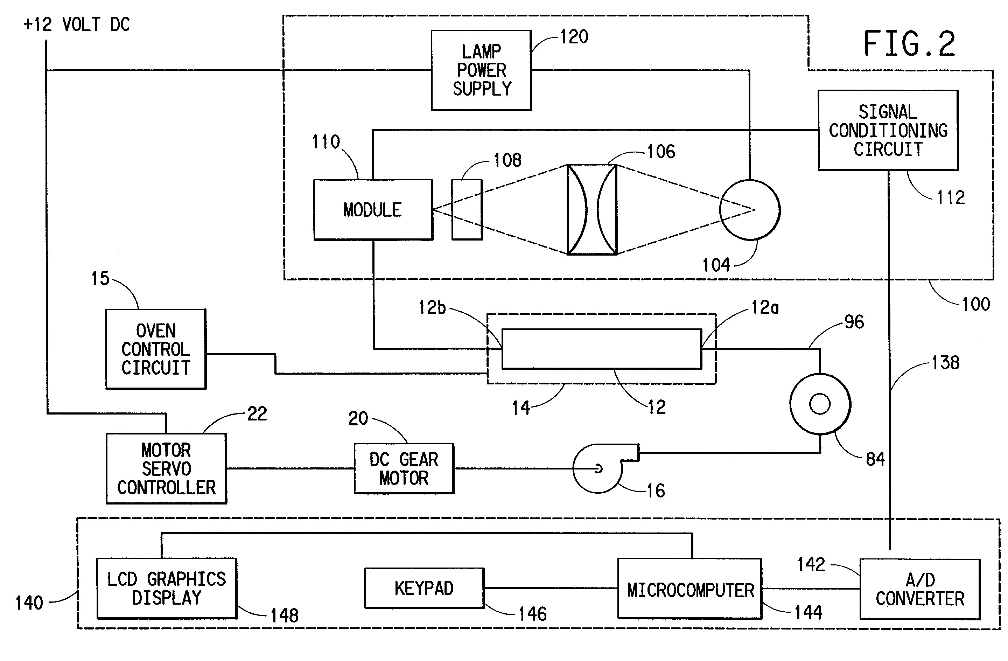

The column used with the present invention is a commercially available, off-the-shelf item. An example of a column suitable for use with the present invention is a Hypersil ODS reverse-phase column. To maintain constant column temperature, the column is mounted in an aluminum column oven 14 as shown in Fig. 2. Oven 14 is heated by four membrane heaters, such as heater model #HK5162R52.3L12B, available from Minco Products, Inc., of Minneapolis, Minnesota. The oven temperature is controlled by an oven control circuit 15, comprising a thermocouple amplifier having cold conjunction compensation. A thermocouple amplifier suitable for use with the present invention is model #AD595CQ, available from Analog Devices Inc., of Norwood, Massachusetts.

The field portable liquid chromatographic system of the present invention also comprises a pump for introducing a carrier fluid into the column. As shown in Fig. 1, a pump 16 introduces a carrier fluid from a carrier fluid reservoir 18 into column 12 through inlet 12a. In the preferred embodiment, the pump used in the field portable liquid chromatographic system of the present invention is a cam-driven, multi-piston, high-pressure pump which is rated at 6000 psi, and which is capable of gradient generation. A pump suitable for use with the present invention is a Du Pont 800 series pump.

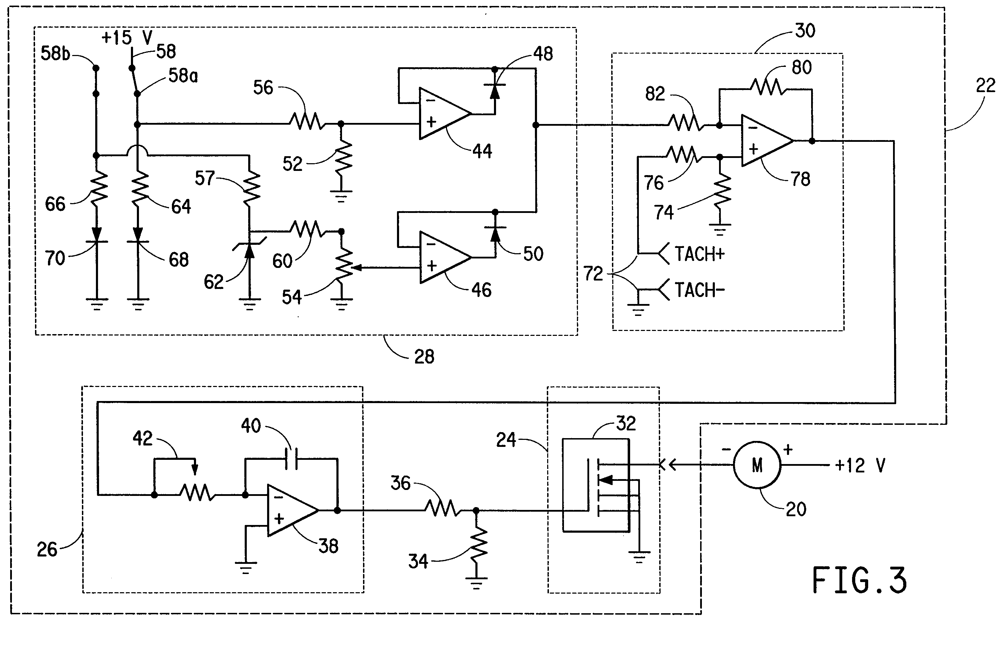

The chromatographic system of the present invention further comprises a motor and a control circuit for driving the pump. A motor 20 and a control circuit, which in the preferred embodiment is a servo-controller circuit 22 as shown in Figs. 2 and 3, drive pump 16. A motor suitable for use with the present invention is a DC gear motor, such as Model 2332-908-55-277-28, available from Maxon Precision Motors of Somerset, Massachusetts. In the present invention, the servo-controller circuit which drives the motor is designed so that a high-pressure pump can be used which can be powered from a 12-volt power supply, such as a battery. Specifically, the motor used with the present invention can operate at speeds up to 5000 RPM, but is geared down 500:1 to provide the torque and RPM range needed for the pump to operate at flow rates up to 2.0 milliliters per minute while consuming less than one watt of power.

Servo-controller circuit 22 comprises a current control circuit 24, an integrator circuit 26, a setpoint circuit 28 and a differential amplifier circuit 30. Current control circuit 24 comprises a MOSFET 32 as shown in Fig 3. Current control circuit 24 controls the flow of current through the motor, and thus controls the motor speed. A pair of resistors 34, 36 connect current control circuit 24 to integrator circuit 26. Integrator circuit 26 comprises an operational amplifier 38 and a capacitor 40 and a potentiometer 42 connected to the operational amplifier and the capacitor. Integrator circuit 26 controls the operation of MOSFET 32 as well as integrates a signal received from differential amplifier circuit 30. Setpoint circuit 28 sets the motor speed at either a fixed high speed or an adjustable speed. Setpoint circuit 28 comprises a fixed, high-speed setpoint loop and an adjustable speed setpoint loop. Each of the fixed, high-speed setpoint and the adjustable speed setpoint loops comprises an operational amplifier 44, 46, respectively, and a diode 48, 50, respectively. Operational amplifier 44 is connected to a resistor 52 and a resistor 56. Operational amplifier 46 is connected to a potentiometer 54. Potentiometer 54 sets the adjustable setpoint of the motor speed. Resistors 52 and 56 set the fixed setpoint of the motor speed. Potentiometer 54 is connected by a resistor 60 to a zener diode 62, which provides a fixed voltage across potentiometer 54 and resistor 60, to a switch 58. A fixed percentage of the zener diode voltage as determined by the ratio of the resistances of potentiometer 54 and resistor 60, respectively, is dropped across potentiometer 54. A portion of this fixed percentage determines the setpoint. Zener diode 62 is connected to switch 58 by a resister 57. Switch 58 is movable between a fixed, high-speed position at 58a or an adjustable speed position at 58b. Switch 58 is connected to a pair of resistors 64, 66 and a pair of LED's 68, 70, which indicate whether the motor is being run at a fixed high speed or at an adjustable speed. Differential amplifier circuit 30 comprises a tachometer 72, which is commercially available and which is connected to a pair of resistors 74, 76, and an operational amplifier 78. Operational amplifer 78 is connected to a resistor 80 and a resistor 82. Resistor 82 connects differential amplifier circuit 30 to setpoint circuit 28. Differential amplifier circuit 30 compares the set point voltage from either the fixed, high-speed setpoint or the adjustable setpoint to the output of tachometer 72. The difference between these two signals is integrated by integrator circuit 26 and is used as a control signal to adjust the speed of the pump motor until the setpoint and the tachometer output are equal. This produces a steady flow from the pump over a wide range of back pressure conditions.

As embodied herein, the field portable liquid chromatographic system of the present invention also comprises injection means for introducing the sample to the carrier fluid at the inlet of the column. In the preferred embodiment, the injection means comprises an injector valve 84 as shown in Figs. 1a and 1b for introducing the sample of liquid from a syringe 86 through line 88 as shown in Figs. 1a and 1b to the carrier fluid at inlet 12a of column 12. An injector valve utilized with the present invention is model 7125, available from Rheodyne, Inc., of Cotati, California. Injector valve 84 is equipped with a removable sample loop 90; the volume of the loop is controlled by the length and inside diameter of the loop. The sample loops used with the present invention are in the range of 20 - 100 microliters. The valve is also equipped with a rotatable handle, not shown, which is rotatable between an "INJECT" position and a "LOAD" position. When the handle is rotated to the "LOAD" position as shown in Fig. 1a, the sample is loaded into sample loop 90 with syringe 86 via line 88, and the excess sample drains through a line 92 to a waste reservoir 94. Also, carrier fluid flows from carrier fluid reservoir 18 through a line 96 to inlet 12a of the column. Once the sample loop has been filled, the handle of the injector valve is rotated to the "INJECT" position as shown in Fig. 1b. In this position, pump 16 delivers carrier fluid from carrier fluid reservoir 18 through loop 90 via line 96 to inlet 12a, so that the carrier fluid sweeps the sample of liquid out of the sample loop and is injected onto the column.

It will be apparent to those skilled in the art that various modifications and variations can be made in the system of the present invention without departing from the scope or spirit of the invention. As an example, although a valve is shown in Figs. 1a and 1b, the injection means may comprise a solid-phase extraction cartridge, an on-column concentration system, a concentration on a guard column system or a disc made of polytetrafluoroethylene impregnated with stationary-phase material, such as silica, sold under the trademark Empore and commercially available from Analytichem, International, a division of Varian, Inc. of Harbor City, California.

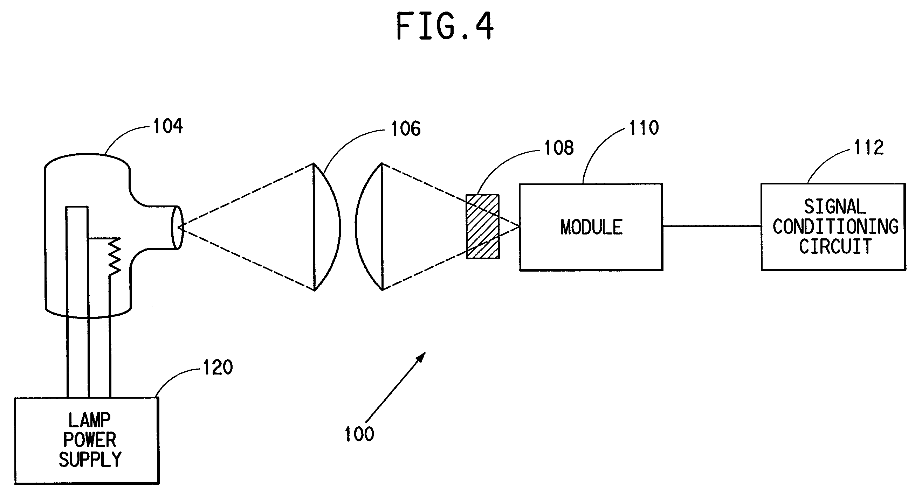

Further in accordance with the present invention, the field portable liquid chromatographic system comprises detection means disposed in alignment with the outlet of the column for measuring the properties of the organic analytes in the sample while maintaining the chemical identity of the analytes. The detection means is shown generally at 100 in Figs. 1a and 4. Detection means 100 is connected by a line 98 to waste reservoir 94 to drain the liquid after it has been analyzed. The detection means comprises means for generating radiant energy, shown at 104 in Fig. 4 as a lamp. In the preferred embodiment, the means for generating radiant energy comprises a deuterium lamp. Alternatively, the means for generating radiant energy may comprise a halogen lamp, a mercury lamp, a xenon lamp or an elemental lamp.

The detection means of the present invention further comprises a collector for collecting the radiant energy. As shown in Figs. 2 and 4, a collector 106 is disposed in optical alignment with lamp 104. Collector 106 collects the radiant energy generated by lamp 104.

The detection means of the present invention further comprises an interference filter for selecting a desired wavelength of the collected radiant energy. As shown in Figs. 2 and 4, an interference filter 108 is disposed in optical alignment with collector 106 and with lamp 104. Interference filter 108 selects a desired wavelength of the collected radiant energy. In the preferred embodiment of the present invention, which uses a deuterium lamp, the deuterium lamp generates radiant energy, useful primarily in the wavelength range of 200-400 nanometers, and the interference filter selects a desired wavelength within this range.

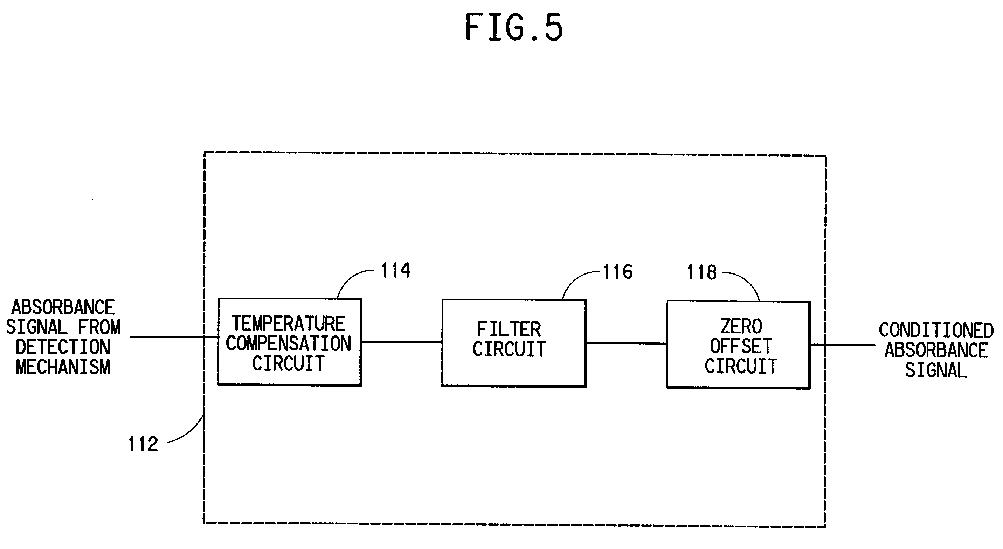

The detection means of the present invention further comprises a module for detecting the absorbance of the filtered radiant energy. As shown in Figs. 2 and 4, a module 110 is disposed in optical alignment with filter 108, collector 106 and lamp 104. The module used with the present invention incorporates a flow cell, a pair of photodiodes and a pre-amplifier circuit commercially available as two, off-the-shelf items, typically used together. A module suitable for use with the present invention incorporates model #97817 and model #99539, available from Waters, Inc. of Milford, Massachusetts. Collector 106 focuses the radiant energy from lamp 104 onto the flow cell of module 110. Interference filter 108 selectively transmits the desired wavelength of the collected radiant energy to module 110. The photodiodes in the module detect the absorbance of the radiant energy from lamp 104 after it has been filtered by filter 108 and output this absorbance as an absorbance signal to a signal conditioning circuit shown generally at 112 in Figs. 2 and 5, and which is part of detection means 100.

As shown in Fig. 5, signal conditioning circuit 112 comprises a temperature compensation circuit 114, a filter circuit 116 and a zero offset circuit 118. Temperature compensation circuit 114 provides temperature compensation of the absorbance signal, so that the temperature of the absorbance signal is independent of the signal conditioning circuit. From temperature compensation circuit 114 the absorbance signal is sent to filter circuit 116, which filters noise from the absorbance signal. The absorbance signal is then sent to zero offset circuit 118, which enables the baseline of the chromatogram voltage level to be shifted for electronic covenience. The resultant output of signal conditioning circuit 112 is a conditioned absorbance signal.

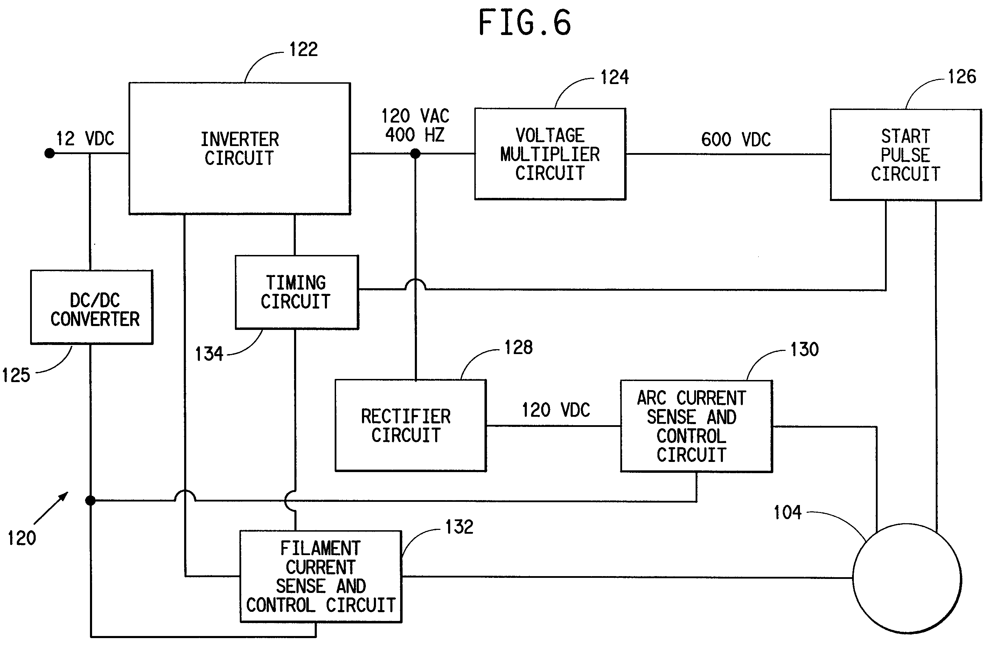

The detection means of the present invention further comprises a lamp power supply. A lamp power supply is shown generally at 120 in Figs. 4 and 6. In accordance with the present invention, the power supply has been modified so that the deuterium lamp can operate from a 12-volt DC source, such as a battery. The power supply used with the present invention is a commercially available power supply, such as model C1518, available from Hamamatsu, Inc. of Bridgewater, New Jersey. The transformer of the power supply was replaced with a self-resonant inverter circuit 122, a voltage multiplier 124 and a DC/DC converter 125, which powers the circuits of the power supply as shown in Fig. 6. The rest of the power supply was left functionally unaltered and comprises a start pulse circuit 126, a rectifier circuit 128, an arc current sense and control circuit 130, a filament current sense and control circuit 132 and a timing circuit 134.

Inverter circuit 122 converts the output voltage from the 12-volt DC battery to 120 VAC power at approximately 400 Hertz. An inverter circuit suitable for use with the power supply of the present invention is model # 23-1110-1, available from A.I.D./R.C. Allen, Inc. of Wichita, Kansas. A first portion of the high-voltage, AC current output from inverter circuit 122 is fed to voltage multiplier circuit 124. Voltage multiplier circuit 124 converts the first portion of the high-voltage, AC current to a voltage sufficient to provide a starting pulse for the deuterium lamp (i.e., approximately 600 volts DC) and sends this voltage to start pulse circuit 126. The voltage from voltage multiplier circuit 124 is stored in a capacitor in the start pulse circuit and is used to provide a high voltage pulse to start lamp 104. Rectifier circuit 128 is disposed between inverter circuit 122 and arc current sense and control circuit 130 and converts a second portion of the high-voltage AC current from inverter circuit 122 to high-voltage DC current, which is approximately 120 VDC. After rectification, the high-voltage DC current is supplied to lamp 104. Arc current sense and control circuit 130 regulates the lamp current so that is is maintained at about 300 milli-amps, which is required for proper lamp operation.

Filament current sense and control circuit 132 maintains a controlled voltage drop across the heating filament of lamp 104. When the power supply is initially turned on, the lamp filament is controlled at a fixed voltage of 10 volts to warm the lamp. At the same time, voltage multiplier circuit 122 is charging the capacitor in start pulse circuit 126 to approximately 600 V. After a period of approximately 60 seconds, timing circuit 134 switches a relay in start pulse circuit 126, which allows the capacitor of the start pulse circuit to discharge across the lamp arc gap. This starting pulse ignites the lamp, after which time the arc is maintained at a fixed current of 300 milli-amps by arc current sense and control circuit 130. Aditionally, upon igniting the lamp, the filament voltage is reduced from 10 V to 7 V for proper operation of the lamp.

Further in accordance with the present invention there is provided computer means for converting, storing and displaying the output of the detection means. The computer means are shown generally at 140 in Figs. 1a and 2. As shown in Fig. 2, the computer means comprises an A/D converter 142, a microcomputer 144, a keypad 146 and and LCD graphics display 148. A/D converter 142 receives the absorbance signal from signal conditioning circuit 112 and converts it from an analog to a digital signal. Microcomputer 144 converts the digitized absorbance signal into a chromatogram. A microcomputer suitable for use with the present invention is model #MC-1i, available from Basicon, Inc., of Portland, Oregon. The chromatogram plots the output of detection means 100 as a function of time, and is indicative of either the identity and the quantity of the analytes, or both, in a sample of liquid.

The system of the present invention comprises means for displaying the output of the detection means as a function of time. The display means comprises a graphics display, such as LCD graphics display 148, which displays the chromatogram. An LCD graphics display suitable for use with the present invention is model #1301 VST available from the AND Corporation of Burlingame, California. Alternatively, the means for displaying the output of the detection means as a function of time comprises a strip chart recorder, not shown, for recording the chromatogram. Keypad 146 provides a user interface with microcomputer 142 and with graphics display 148.

All of the components of the field portable liquid chromatographic system of the present invention are mounted in a gasketed aluminum enclosure. The power supply for the deuterium lamp, the A/D converter, the microcomputer, the keypad and the LCD graphics display are mounted in the lid of the enclosure. The rest of the components of the field portable liquid chromatographic system of the present invention, including the deteurium lamp, the column, the column oven, the thermocouple circuit, the pump, the injector valve, the carrier fluid reservoir, the waste reservoir, the DC gear motor, the servo-controller circuit, the module and the signal conditioning circuit, are disposed in the bottom of the enclosure.

In operation, a sample is injected from syringe 86 through line 88 into injector valve 84 with the handle of the valve in the "LOAD" position to fill sample loop 90. Any excess sample liquid drains through line 92 into waste reservoir 94. When the valve handle is switched to the "INJECT" position, carrier fluid is pumped by pump 16 from carrier fluid reservoir 18 to sweep the sample out of sample loop 90 and onto inlet 12a of column 12 via line 96. The analytes in the sample are separated in column 12 based on the affinity of the stationary phase, (i.e., the packing material), in the column for the analyte molecules in the carrier fluid (i.e., the mobile phase). The competition between the stationary and mobile phases for the analytes causes the analytes to differentially migrate and thus causes their separation. The absorbance properties of the analytes eluting from column outlet 12b are measured by detection mechanism 100. The output of detection mechanism 100 is sent to signal conditioning circuit 112 and to computer means 140, where it is converted to a chromatogram, stored and displayed.

The displayed detector output (i.e., the chromatogram) is used to determine a peak volume for the system of the present invention. This peak volume is used as a design criterion to specify other volumes throughout the system, e.g., the volume of the detection means and the volume of the tubing connecting the elements of the system. These other volumes effect the resolution and sensitivity of the system. The peak volume is defined substantially by the relationship:

$$V_p = \tau \ d_c^2 \ \varepsilon \ L \ \frac{(1 + k')}{\sqrt{N}}$$

where:

$d_c$ = column diameter  
$\epsilon$ = column porosity  
L = column length  
k' = capacity factor; and  
N = number of theoretical plates  

The number of theoretical plates, N, is given by the following equation:

$$N = \left(\frac{t_R'}{\sigma t}\right)^2 \qquad (2)$$

where $t_R'$ is the time for elution of the band center and $\sigma_t^2$ is the band variance in time units, and the standard deviation of the peak, $\sigma_t$, is:

$$\sigma_t = \frac{w_b}{4} \qquad (3)$$

where $w_b$ is the width at the base of the peak. Thus,

$$N = 16\left(\frac{t_R'}{w_b}\right)^2 \qquad (4)$$

Also, the capacity factor, k', is given by the following equation:

$$k' = \frac{t_R - t_m}{t_m} = \frac{t_R'}{t_m} \qquad (5)$$

where $t_M$ is the time for elution of a nonretained peak and is given by the following equation:

$$t_m = \frac{L}{u} \qquad (6)$$

where u is the linear velocity of the mobile phase.

The volumetric flow rate of the mobile phase, F, is given by:

$$F = Au\epsilon \qquad (7)$$

where F is in cm$^3$/sec, A is the area of the column in cm$^2$ and $\epsilon$ is the column porosity. The area, A, is given by the equation:

$$A = \frac{\pi d_c^2}{4} \qquad (8)$$

Accordingly, the number of theoretical plates, N, is:

$$N = 16\left(\frac{t_R - t_m}{w_b}\right)^2 \qquad (9)$$

where $t_R$, $t_M$ and $w_b$ are in minutes.

By optimizing the parameters $d_c$, $\epsilon$, L, k' and N which define the peak volume, a field portable system which has high speed and sensitivity may be achieved. In particular, it has been found that by optimizing the ranges for the above variables, a field portable liquid chromatographic system which runs off a 12-volt power supply which is capable of high-speed separation of a sample and which has all of the quantitative capabilites of a laboratory high-pressure liquid chromatograph while allowing for use for on-site analysis in remote locations may be achieved. The optimum ranges for the above variables are given as follows:

$d_c$ = 0.5 - 4.6 mm
$\epsilon$ = 0.4 - 1.0
L = 10 - 100 mm
k' = 1 - 50; and
N = 500 - 15,000

The system of the present invention, which uses the above ranges, has the following advantages over other field portable systems of the prior art. First, it is more sensitive because its chromatogram peaks are narrower, and thus, peak height is greater for the same area. In addition the reduced peak width results in improved resolution. Also, the system of the present invention uses less solvent, since its column volume is relatively small. Therefore, the concentration of analytes at the detection mechanism is greater. For this reason, the chromatographic system of the present invention is more sensitive to smaller concentrations of analytes.

In addition, since the system of the present invention has a relatively small column volume, it uses less solvent. Because solvent is expensive to purchase and even more expensive to dispose of, the system of the present invention provides signficant cost savings. In addition, the optimum range for column length of the present invention reduces the cost of the packing material in the column, since there is less column volume to pack. Moreover, shorter columns, reduced solvent consumption and reduced packing material all contribute to the portability and speed of the analysis of the system of the present invention.

Also, since the system of the present invention is capable of high-speed separation, which allows more samples to be analyzed in a specified time period, a backlog of samples is typically not created. Therefore, the samples taken with the system of the present invention are closer to a real-time analysis than those taken with known field portable devices. Additionally, the speed of separation of the system of the present invention makes it suitable for screening as well as for analysis of organic analytes.

The invention will be clarified by the following examples, which are intended to be purely exemplary of the invention.

EXAMPLE 1 - Separation of bromacil, simazine and diuron

A series of six standard samples containing analytes bromacil (99.8% pure, CAS# 314-40-9, commercially available as Hyvar[R] from E. I. du Pont de Nemours & Co., Wilmington, DE), simazine (qualitative standard, CAS# 122-34-9, commercially available from Supelco, Bellefonte, PA), and diuron (100% pure, CAS# 330-54-1, commercially available as Diurex[R] from Du Pont), in water was injected via the syringe to the injector valve through a 20 microliter sample loop of the system of the present invention as described above, with the valve's handle in "LOAD" position in the concentrations listed in Table 1.

TABLE 1

| sample | bromacil | | simazine | | diuron | |
|---|---|---|---|---|---|---|
| | ppb | mAU | ppb | mAU | ppb | mAU |
| 1 | 5.00 | 0.098 | 6.00 | 0.118 | 5.00 | 0.118 |
| 2 | 10.00 | 0.157 | 12.20 | 0.236 | 10.00 | 0.217 |
| 3 | 12.50 | 0.217 | 15.00 | 0.295 | 12.50 | 0.236 |
| 4 | 25.00 | 0.374 | 30.00 | 0.551 | 25.00 | 0.472 |
| 5 | 50.00 | 0.768 | 60.00 | 1.240 | 50.00 | 1.024 |
| 6 | 100.00 | 1.654 | 120.00 | 2.835 | 100.00 | 2.165 |

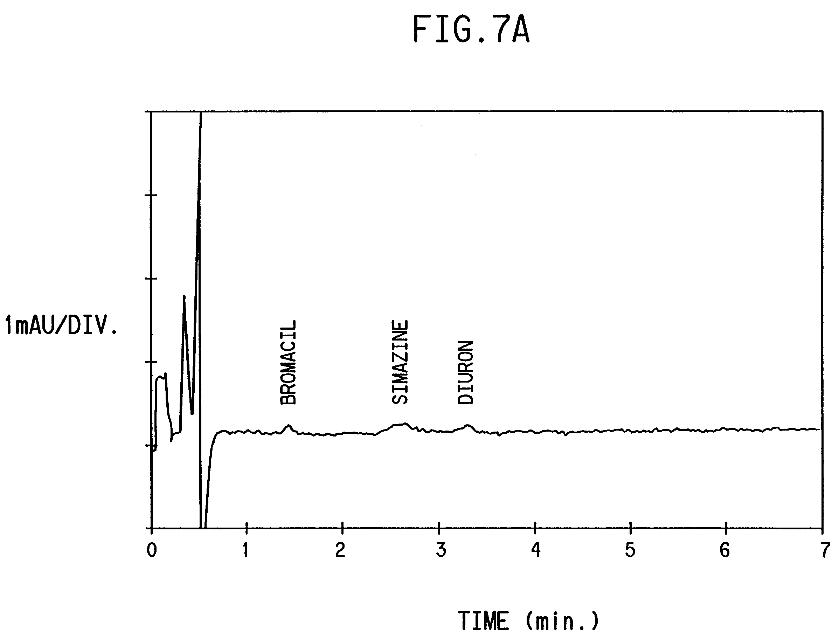

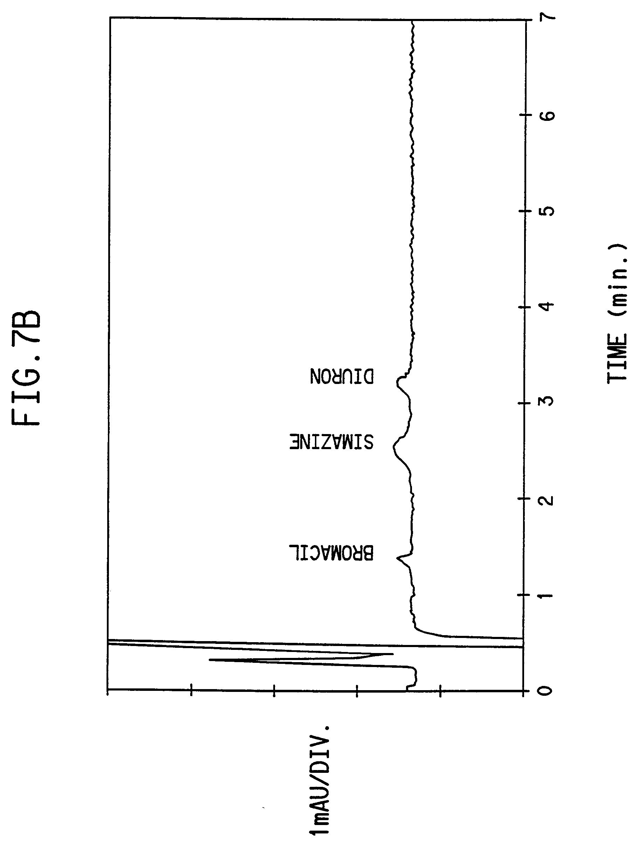

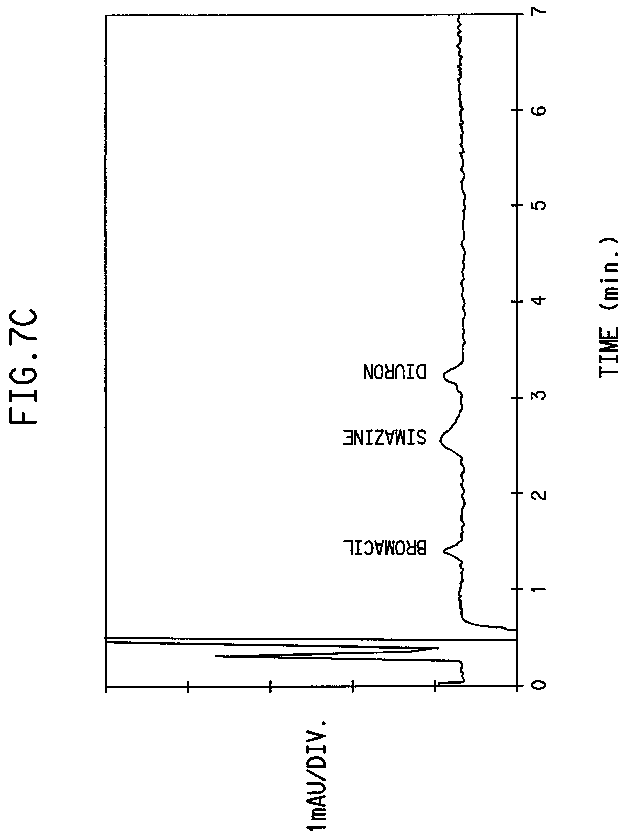

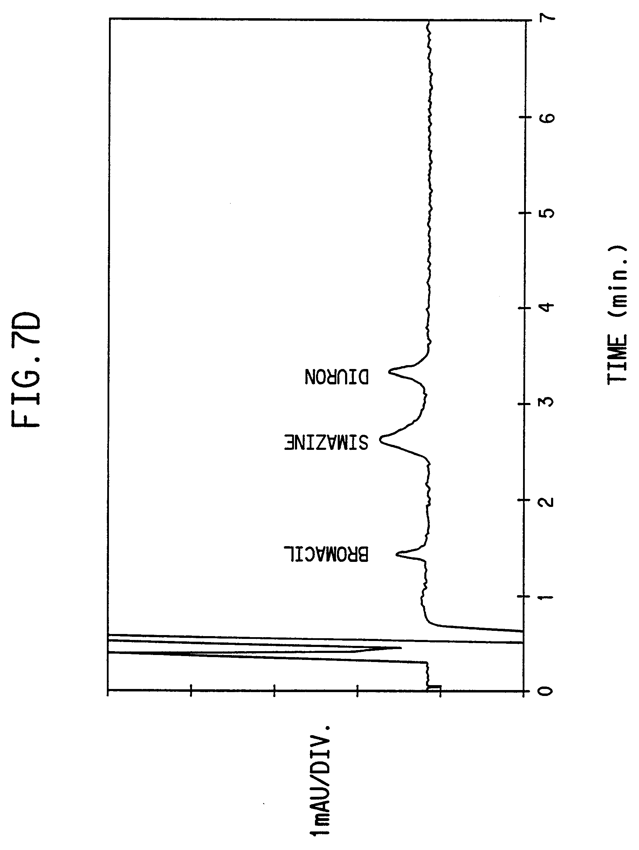

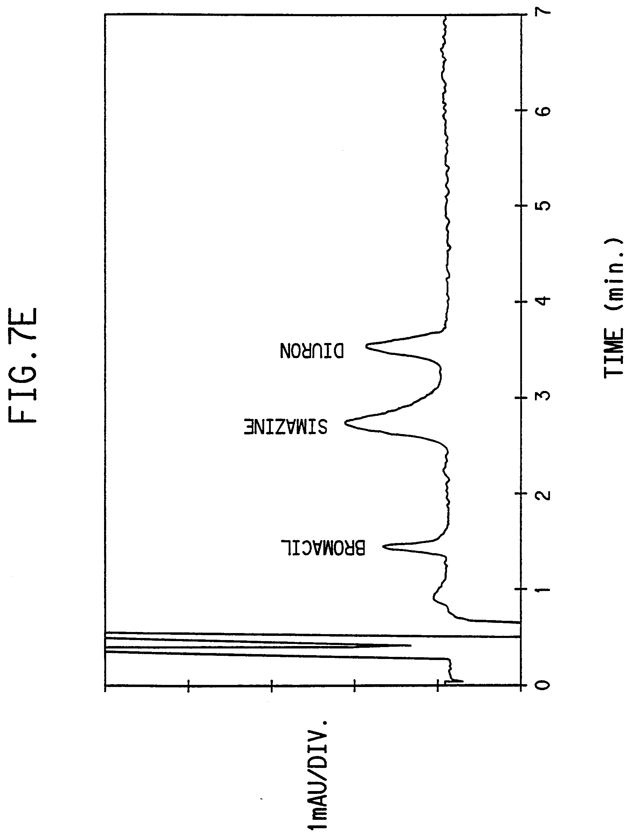

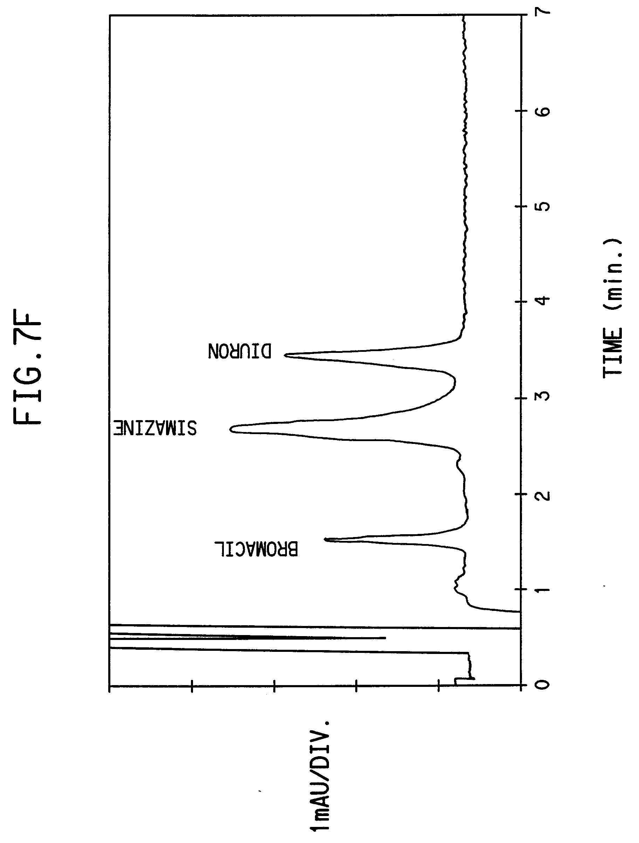

A stream of carrier fluid containing 70% deionized water (as run through a water system, sold under the trademark Milli QR by the Millipore Corporation, Milford, Massachusetts) adjusted to a pH of 3.0 by the addition of 85% phosphoric acid (HPLC grade from Fisher Scientific Company, Pittsburgh, PA) and 30% acetonitrile (HPLC grade, Omnisolve[R], glass distilled from E. M. Science, Gibbstown, N. J.) was pumped from the carrier fluid reservoir via the pump at a flow rate of 0.6 ml/min. to the injector valve with the valve's handle rotated to the "INJECT" position, which allowed the carrier fluid to sweep the sample out of the sample loop and onto the column. The column was a Hypersil ODS HPLC column, part# 79916OD-552, commercially available from Hewlett Packard of West Germany, with an internal diameter of 2.1 mm, a length of 100 mm, a column porosity of 0.6 and packed with 5 micron particles. The column temperature was maintained at 50° C by the oven. The analytes were separated by the column based on the affinity of the stationary phase, or packing material, (octyldecyl silane on silica) for the analyte molecules in the carrier fluid, or mobile phase. The competition between the stationary and mobile phases for the analytes caused the analytes to differentially migrate and thus caused their separation. The conditions of the separation column listed above provide for separation, elution and detection of the analytes of these standard samples in less than 4 minutes. The absorbance properties of the analytes eluting from the column outlet 12b were measured directly by the detection mechanism. The output of the detection mechanism was displayed in the form of a chromatogram, which plots milli-absorbance units (mAU) per division versus elapsed time (minutes) as shown in Figs. 7a - 7g. The wavelength of the deuterium arc lamp of the detection mechanism for this example was 214 nm. The chromatograms of Figs. 7a - 7g show the detector response for standard samples of bromacil, simazine and diuron at various concentrations, against which field samples can be compared.

As noted above, the values for the following variables were known:

dc = column internal diameter = 2.1mm.
$\epsilon$ = column porosity = 0.6
L = column length = 100mm.

The flow rate, F, was also known as given above. Using these values, the area of the column was calculated using equation (8) to be $3.46 \times 10^{-2}$ cm$^2$, the linear velocity, u, was calculated using equation (7) to be 0.48 cm/sec., and the time for elution of the nonretained peak, $t_M$, was calculated using equation (6) to be 20.8 sec. ($^-$0.35 min.). The number of theoretical plates, N, was calculated using equation (9) to be 1209 for the bromacil peak and 17.24 for the diuron peak. The capacity factor, k', was calculated using equation (5) to be 3.23 for the bromacil peak and 8.60 for the diuron peak. Accordingly, the peak volume was calculated using equation (1) to be 101.1 mm$^3$ (101.1 $\mu$l) for the bromacil peak and 192.2 mm$^3$ (192.2 $\mu$l) for the diuron peak.

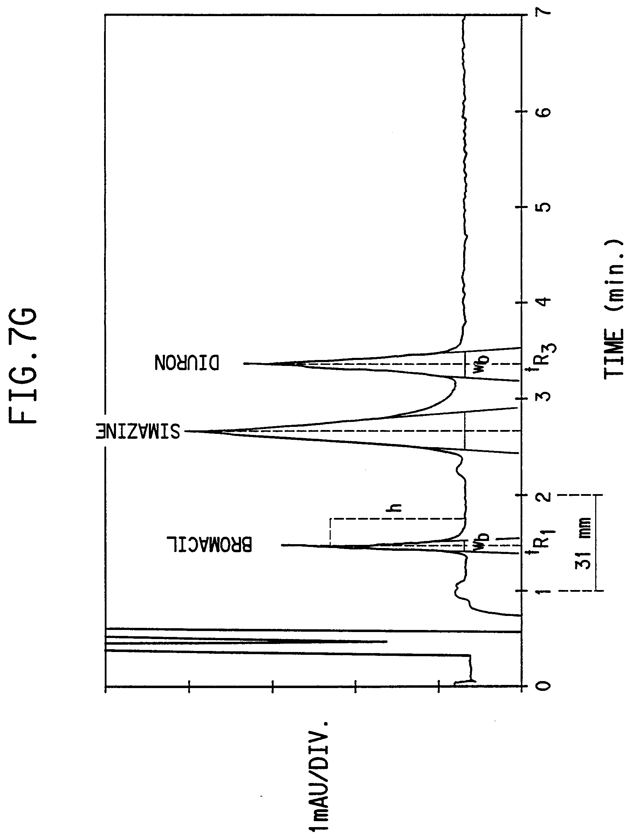

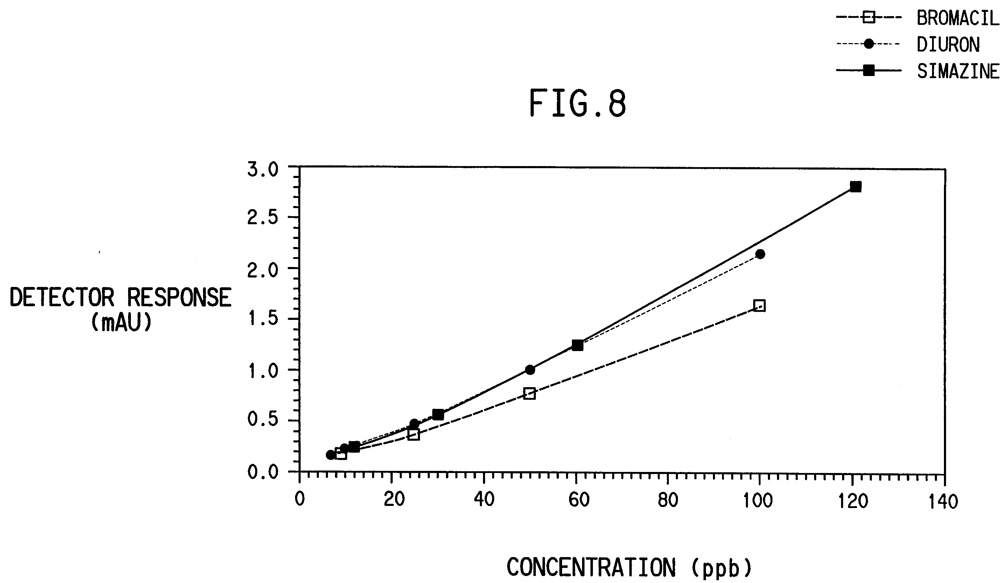

From the chromatograms of these standard samples, peaks for bromacil, simazine, and diuron were identified with respective retention times of 1.5 minutes, 2.8 minutes, 3.4 minutes. Calibration curves as shown in Fig. 8 for the three analytes were constructed by plotting the detector response, i.e., the peak height, h, as shown in Fig. 7g (milli-absorbance units) versus the concentration (ppb) of the anaylytes.

EXAMPLE 2 Analysis of field sample

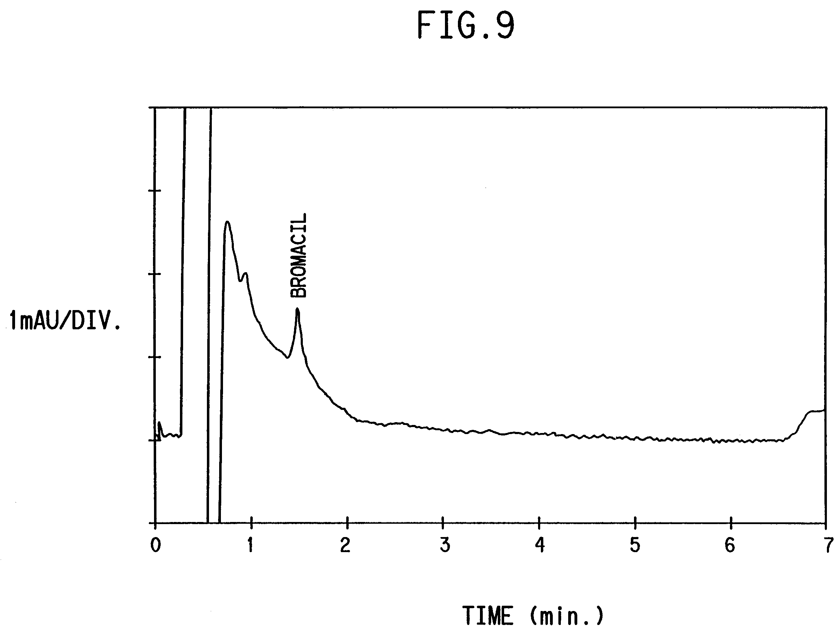

A 20 microliter sample of ground water was injected, separated, and detected under the same conditions as outlined in Example 1. By comparison of the resulting chromatogram shown in Fig. 9, to the chromatograms of the six standardized samples of Example 1, bromacil was identified. By comparing the response of the detection mechanism to bromacil against the calibration curve plotted for Example 1, the concentration of bromacil was determined to be 44 ppb.

EXAMPLE 3 Separation of sulfonylureas

A 20 microliter standard sample comprising six sulfonylurea analytes was injected, separated, and detected under the same conditions as outlined in Example 1 in less than six minutes. The sample composition was:
- o  5 ppb thiameturon methyl, 98.3% pure, CAS*# 79277-27-3, Harmony$^R$
- o  5 ppb metsulfuron methyl, 99.4% pure, CAS# 74223-64-6, Ally$^R$
- o  5 ppb sulfometuron methyl, 99.0% pure, CAS# 74222-97-2, Oust$^R$
- o  5 ppb chlorsulfuron, 99.7% pure, CAS# 64902-72-31, Glean$^R$
- o  5 ppb no common name, 99.5% pure, CAS# 122931-48-0, Titus$^{TM}$
- o  5 ppb benzsulfuron methyl, 99.36% pure, CAS# 83055-99-6, Londax$^R$

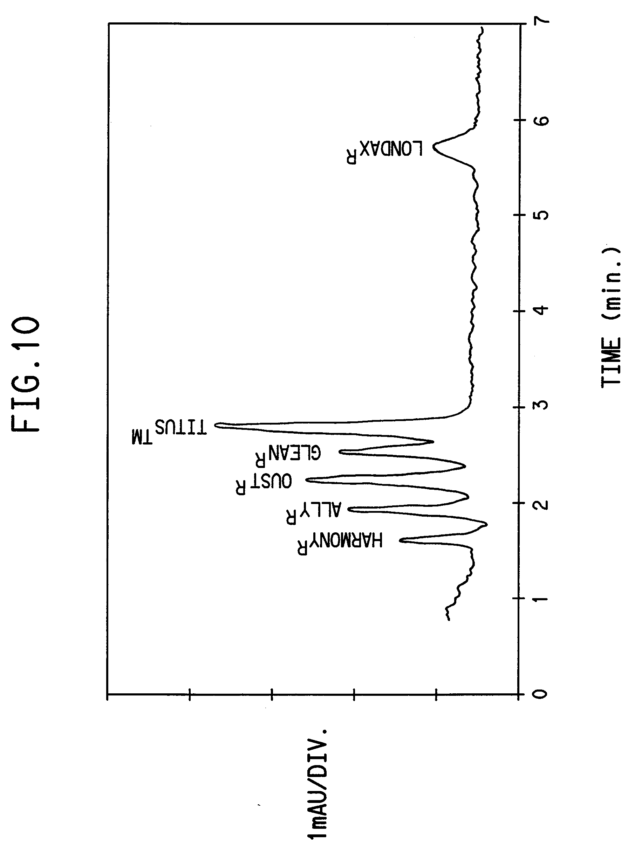

remainder river water, all of the sulfonylureas being commercially available from E. I. du Pont de Nemours & Co. Wilmington, DE. Fig. 10 is the resultant chromatogram showing the speed and sensitivity for resolving multiple analytes with similar retention times which can be used as a standard against which field samples can be compared.

Additional advantages and modifications will readily occur to those skilled in the art. The invention in its broader aspects, is, therefore, not limited to the specific details, representative apparatus and illustrative examples shown and described. Accordingly, departures may be made from such details without departing from the spirit or scope of the general inventive concept as defined by the appended claims and their equivalents.

**Claims**

1.  A high-pressure, field portable liquid chromatographic system for determining at least one of the identity and concentration of organic analytes in a sample of liquid, comprising:
    (a) a column having an inlet and an outlet, the liquid eluting from the outlet;
    (b) a pump for introducing a carrier fluid at a high pressure into the column;
    (c) injection means for introducing the sample to the carrier fluid at the inlet of the column; and
    (d) detecting means disposed in alignment with the outlet of the column for measuring the properties of the organic analytes in the sample.

*Chemical Abstract Service number

2. The system as claimed in claim 1, further comprising a motor and a control circuit for driving the pump.

3. A field portable liquid chromatographic system for determining at least one of the identity and concentration of organic analytes in a sample of liquid, comprising:

(a) a column having an inlet and an outlet, the liquid eluting from the outlet;

(b) a pump for introducing a carrier fluid into the column;

(c) injection means for introducing the sample to the carrier fluid at the inlet of the column; and

(d) detecting means disposed in alignment with the outlet of the column for measuring the properties of the organic analytes in the sample while maintaining the chemical identity thereof.

4. The system as claimed in claim 3, further including computer means for converting, storing and displaying the detector output.

5. The system as described in claim 3, wherein the detection means comprises means for generating radiant energy.

6. The system as claimed in claim 5, wherein the means for generating radiant energy comprises a deuterium lamp.

7. The system as claimed in claim 5, wherein the detection means further comprises a collector for collecting the radiant energy generated by the detection means.

8. The system as claimed in claim 1, wherein the detection means further comprises a module for detecting the absorbance of the filtered radiant energy.

9. The system as claimed in claim 6, wherein the deuterium lamp generates radiant energy useful in the wavelength range of 200-400 nanometers.

10. A field portable liquid chromatographic system for determining at least one of the identity and concentration of organic analytes in a sample of liquid, comprising:

(a) a column having an inlet and an outlet, the liquid eluting from the outlet;

(b) a pump for introducing a carrier fluid into the column;

(c) injection means for introducing the sample to the carrier fluid at the inlet of the column;

(d) detection means disposed in alignment with the outlet of the column for measuring the properties of the analytes in the sample, the detection means having an output indicative of at least one of the identity and quantity of the analytes; and

(e) means for displaying the output as a function of time, wherein the displaced output is used to determine a peak volume, the peak volume being defined substantially by the relationship:

$$V_p = \frac{\pi\ d_c^2\ \varepsilon\ L\ (1\ +\ k')}{\sqrt{N}}$$

where:

dc = column internal diameter = 0.5 - 4.6 mm
$\epsilon$ = column porosity = 0.4 - 1.0
L = column length = 10 - 100 mm
k' = capacity factor = 1 - 50; and
N = number of plates = 800 - 15,000

# FIG.1A

# FIG.1B

FIG.2

FIG.3

# FIG.4

EP 0 600 213 A1

# FIG.5

ABSORBANCE SIGNAL FROM DETECTION MECHANISM

TEMPERATURE COMPENSATION CIRCUIT — 114

FILTER CIRCUIT — 116

ZERO OFFSET CIRCUIT — 118

CONDITIONED ABSORBANCE SIGNAL

112

EP 0 600 213 A1

## FIG.6

EP 0 600 213 A1

# FIG.7A

# FIG.7B

EP 0 600 213 A1

# FIG.7C

BROMACIL

SIMAZINE

DIURON

1mAU/DIV.

TIME (min.)

# FIG.7D

1mAU/DIV.

BROMACIL

SIMAZINE

DIURON

TIME (min.)

EP 0 600 213 A1

# FIG.7E

# FIG.7F

1mAU/DIV.

BROMACIL

SIMAZINE

DIURON

TIME (min.)

EP 0 600 213 A1

# FIG.7G

TIME (min.)

1mAU/DIV.

BROMACIL

SIMAZINE

DIURON

31 mm

EP 0 600 213 A1

FIG.8

Legend:
- —☐— BROMACIL
- —●— DIURON
- —■— SIMAZINE

CONCENTRATION (ppb)

DETECTOR RESPONSE (mAU)

EP 0 600 213 A1

# FIG.9

1mAU/DIV.

BROMACIL

TIME (min.)

EP 0 600 213 A1

# FIG.10

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 328 146 (PERKIN ELMER CORP.) 16 August 1989 <br> * column 3 - column 5; figure 1 * <br> --- | 1,3,10 | G01N30/02 <br> G01N30/74 |
| A | US-A-5 087 360 (WRIGHT) 11 February 1992 <br> * column 5 - column 7 * <br> --- | 1,3,10 | |
| A | US-A-3 985 166 (KLEE) 12 October 1976 <br> * column 2 - column 3 * <br> --- | 1 | |
| A | US-A-4 732 672 (KIANG) 22 March 1988 <br> * column 7 - column 8; figure 1 * <br> --- | 1 | |
| A,D | US-A-4 888 295 (ZAROMB) 19 December 1989 <br> ----- | 1,3 | |

TECHNICAL FIELDS SEARCHED (Int.Cl.5)

G01N

The present search report has been drawn up for all claims

| Place of search | Date of completion of the search | Examiner |
|---|---|---|
| THE HAGUE | 11 March 1994 | Boehm, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)